(19) Europäisches Patentamt / European Patent Office / Office européen des brevets

(11) **EP 2 652 570 B1**

(12) **FASCICULE DE BREVET EUROPEEN**

(45) Date de publication et mention
de la délivrance du brevet:
**11.09.2019 Bulletin 2019/37**

(21) Numéro de dépôt: **11817330.1**

(22) Date de dépôt: **14.12.2011**

(51) Int Cl.:
***G05D 25/02*** (2006.01)

(86) Numéro de dépôt international:
**PCT/FR2011/052979**

(87) Numéro de publication internationale:
**WO 2012/080657 (21.06.2012 Gazette 2012/25)**

(54) **SYSTÈME DE COMMANDE DE VITRAGES ACTIFS COMPRENANT UN CAPTEUR D'ÉBLOUISSEMENT**

SYSTEM ZUR STEUERUNG AKTIVER GLASPLATTEN MIT EINEM BLENDUNGSSENSOR

SYSTEM FOR CONTROLLING ACTIVE GLASS PANELS INCLUDING A GLARE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2010 FR 1060627**

(43) Date de publication de la demande:
**23.10.2013 Bulletin 2013/43**

(73) Titulaire: **SAGE Electrochromics, Inc.
Faribault, MN 55021-7798 (US)**

(72) Inventeur: **NICOLAS, David
75014 Paris (FR)**

(74) Mandataire: **Saint-Gobain Recherche
Département Propriété Industrielle
39 Quai Lucien Lefranc
93300 Aubervilliers (FR)**

(56) Documents cités:
**WO-A1-2008/048181    WO-A1-2008/048181
WO-A1-2010/116274**

- **ABHIJIT SARKAR ET AL: "CamSensor: A Novel Lighting Control System Integrating. High Dynamic Range Imaging and DALI", LEUKOS : THE JOURNAL OF THE ILLUMINATING ENGINEERING SOCIETY OF NORTH AMERICA, US, vol. 2, no. 4, 1 janvier 2006 (2006-01-01) , pages 307-322, XP009149515, ISSN: 1550-2724**
- **GR NEWSHAM: "A Camera as a sensor for lighting and shading control", LIGHTING RESEARCH AND TECHNOLOGY, ILLUMINATING ENGINEERING SOCIETY, LONDON, GB, vol. 41, no. 2, 1 juin 2009 (2009-06-01), pages 143-163, XP009149514, ISSN: 0024-3426, DOI: DOI:10.1177/1477153508099889**
- **ABHIJIT SARKAR ET AL: "CamSensor: A Novel Lighting Control System Integrating. High Dynamic Range Imaging and DALI", LEUKOS : THE JOURNAL OF THE ILLUMINATING ENGINEERING SOCIETY OF NORTH AME, US, vol. 2, no. 4, 1 January 2006 (2006-01-01) , pages 307-322, XP009149515, ISSN: 1550-2724**
- **GR NEWSHAM: "A Camera as a sensor for lighting and shading control", LIGHTING RESEARCH AND TECHNOL, ILLUMINATING ENGINEERING SOCIETY, LONDON, GB, vol. 41, no. 2, 1 June 2009 (2009-06-01), pages 143-163, XP009149514, ISSN: 0024-3426, DOI: 10.1177/1477153508099889**

**Description**

La présente invention se rapporte au domaine du contrôle de la luminosité à l'intérieur des bâtiments.

Les vitrages des bâtiments présentent l'inconvénient de contribuer à l'échauffement des bâtiments l'été et à leur refroidissement l'hiver.

Depuis le milieu des années 1990, une grande variété de vitrages d'isolation et de contrôle solaire ont été développés par l'industrie du verre. Grâce à des revêtements « bas émissifs » ou « réfléchissants » aujourd'hui sur le marché, de hauts niveaux d'isolation thermique et de protection solaire peuvent être obtenus.

Néanmoins, ces vitrages ont des propriétés fixes qui ne peuvent être adaptées aux conditions de température et d'ensoleillement.

Les vitrages à transmission optique électrocommandable répondent à cette problématique.

Ces vitrages, dits « intelligents », ont des propriétés optiques modifiables électriquement.

L'article « Effect of switchable glazing on discomfort glare from windows », Building Environment 44 (2009) p.1171-1180 discute la possibilité d'utiliser un vitrage électrochrome pour réduire l'éblouissement. Le document WO 2008/048181 A1 décrit un contrôle de luminosité utilisant des vitrages intelligents pour réduire les forts écarts de luminosité entre zones. L'article "A novel Lightning Control System Integrating High Dynamic Range Imaging and DALI", LEUKOS, vol. 2, n° 4, p. 307-322, XP009149515, présente un contrôle de luminosité contrôlant la puissance de l'éclairage issue de lampes à partir d'une cartographie de luminosité obtenue à l'aide d'une caméra.

Néanmoins, la réduction de l'éblouissement d'un utilisateur d'une pièce d'un bâtiment muni de tels vitrages n'est pas toujours satisfaisante dans des conditions réelles.

Un but de la présente invention est de fournir un système de commande d'une pluralité de vitrages à transmission optique électrocommandable pour commander la transmission à travers les vitrages d'un bâtiment et assurer une bonne gestion de l'éblouissement résultant de la lumière traversant les vitrages ou de la lumière diffusée ou réfléchie dans la pièce.

Selon un aspect de la présente invention, le système de commande de la transmission optique d'une pluralité de vitrages actifs $V_k$ à propriétés de transmission optique électrocommandables, comprend :

- au moins un capteur spatial de luminosité pour fournir au moins une valeur représentative de luminosité respectivement pour différentes zones spatiales constituant des sous-ensembles $X_i$ d'un ensemble X et fournir ainsi une cartographie L de luminosité dans laquelle les sous-ensembles $L_i$ de L sont associés aux ensembles $X_i$ ; et
- une unité de commande comprenant une mémoire sur laquelle sont stockés des programmes aptes à commander la transmission optique de chacun desdits vitrages,

lesdits programmes étant aptes à :

- définir une cartographie A de zones spatiales $A_j$ d'éblouissement à partir de la cartographie L de luminosité ;
- utiliser une cartographie O de zones spatiales $O_m$ à luminosité électrocommandable, chaque sous-ensemble $O_m$ étant associé à l'un ou plusieurs desdits vitrages actifs $V_k$ ;
- commander la transmission optique de chacun desdits vitrages actifs $V_k$ en fonction de A et de O.

Selon des modes particuliers de réalisation, le système comporte l'une ou plusieurs des caractéristiques suivantes, prise(s) isolément ou suivant toutes les combinaisons techniquement possibles :

- les sous-ensembles $A_j$ de l'ensemble A sont des valeurs représentatives de zones spatiales fortement lumineuses, fortement contrastées, ou fortement lumineuses et fortement contrastées ;
- lesdites zones spatiales fortement lumineuses, fortement contrastées, ou fortement lumineuses et fortement contrastées sont chacune déterminées par rapport à un même niveau de référence absolu qui est prédéterminé ou calculé ;
- les sous-ensembles $A_j$ de A correspondent à des zones spatiales pour lesquelles une valeur représentative de luminosité est supérieure ou égale à LI avec LI une valeur représentative de luminosité prédéterminée ou calculée ;
- les sous-ensembles $A_j$ de A correspondent à des zones spatiales dont le rapport de valeur représentative de luminosité avec une zone spatiale voisine est supérieure ou égal à CI avec CI une valeur représentative de contraste prédéterminée ou calculée ;
- la cartographie O et les sous-ensembles $O_i$ sont représentatifs de zones spatiales dont la luminosité est contrôlée directement ou indirectement par un ou plusieurs desdits vitrages électrocommandables ;
- selon l'invention, les dits programmes sont aptes à commander la transmission optique de chacun desdits vitrages actifs $V_k$ en fonction également d'informations concernant l'influence relative de chaque vitrage actif $V_k$ sur la valeur représentative de luminosité de chaque zone spatiale $O_m$, par exemple un coefficient affecté à chaque vitrage $V_k$

pour chaque zone $O_m$ ;

- lesdits programmes sont aptes à obtenir automatiquement lesdites informations ;
- lesdites informations sont obtenues par variation simultanée et asynchrone d'une pluralité ou de la totalité desdits vitrages actifs $V_k$;
- la variation asynchrone consiste à varier périodiquement la transmission optique desdits vitrages actifs $V_k$ avec des périodes de longueur différentes ou décalées dans le temps ;
- plusieurs ou chacun desdits vitrages actifs $V_k$ sont commandés individuellement ;
- lesdits vitrages actifs $V_k$ sont des vitrages d'une même pièce d'un bâtiment, les différentes zones spatiales concernant la pièce du bâtiment.

L'invention a également pour objet un ensemble comprenant une pluralité de vitrages actifs $V_k$ à propriétés de transmission optique électrocommandables et un système de commande de la transmission optique desdits vitrages $V_k$, dans lequel le système de commande est tel que décrit ci-dessus.

L'invention a encore pour objet un procédé de commande de la transmission optique d'une pluralité de vitrages actifs $V_k$ à propriétés de transmission optique électrocommandables, comprenant des étapes consistant à :

- utiliser au moins un capteur spatial de luminosité pour fournir au moins une valeur représentative de luminosité respectivement $Li=L(Xi)$ pour différentes zones spatiales Xi d'un ensemble X et fournir ainsi une cartographie L de luminosité dans laquelle les ensembles Li sont associés aux ensembles Xi ;
- définir une cartographie A de zones spatiales Aj d'éblouissement à partir de la cartographie L de luminosité ;
- utiliser une cartographie O de zones spatiales Om à luminosité électrocommandable, chaque sous-ensemble Om étant associé à l'un ou plusieurs desdits vitrages actifs $V_k$ ;
- commander la transmission optique de chacun desdits vitrages actifs $V_k$ en fonction de A et de O.

Selon des modes particuliers de réalisation, le procédé présente l'une ou plusieurs des caractéristiques suivantes, prise(s) isolément ou suivant toutes les combinaisons techniquement possibles :

- les sous-ensembles $A_j$ de l'ensemble A sont des valeurs représentatives de zones spatiales fortement lumineuses, fortement contrastées, ou fortement lumineuses et fortement contrastées ;
- lesdites zones spatiales fortement lumineuses, fortement contrastées, ou fortement lumineuses et fortement contrastées sont chacune déterminées par rapport à un même niveau de référence absolu qui est prédéterminé ou calculé ;
- les sous-ensembles $A_j$ de A correspondent à des zones spatiales pour lesquelles une valeur représentative de luminosité est supérieure ou égale à Ll avec Ll une valeur représentative de luminosité prédéterminée ou calculée ;
- les sous-ensembles $A_j$ de A correspondent à des zones spatiales dont le rapport de valeur représentative de luminosité avec une zone spatiale voisine est supérieure ou égal à Cl avec Cl une valeur représentative de contraste prédéterminée ou calculée ;
- la cartographie O et les sous-ensembles $O_i$ sont représentatifs de zones spatiales dont la luminosité est contrôlée directement ou indirectement par un ou plusieurs desdits vitrages électrocommandables ;
- selon l'invention, la transmission optique de chacun desdits vitrages actifs $V_k$ est commandée en fonction également d'informations concernant l'influence relative de chaque vitrage actif $V_k$ sur la valeur représentative de luminosité de chaque zone spatiale $O_m$, par exemple un coefficient affecté à chaque vitrage $V_k$ pour chaque zone $O_m$ ;
- lesdites informations sont obtenues de façon automatisée ;
- lesdites informations sont obtenues par variation simultanée et asynchrone d'une pluralité ou de la totalité desdits vitrages actifs $V_k$;
- la variation asynchrone consiste à varier périodiquement la transmission optique desdits vitrages actifs $V_k$ avec des périodes de longueur différentes ou décalées dans le temps ;
- plusieurs ou chacun desdits vitrages actifs $V_k$ sont commandés individuellement ;
- lesdits vitrages actifs $V_k$ sont des vitrages d'une même pièce d'un bâtiment, les différentes zones spatiales concernant la pièce du bâtiment.

L'invention sera mieux comprise à la lecture de la description qui va suivre, donnée uniquement à titre d'exemple, et faite en se référant au dessin annexé, sur lesquels :

- la figure 1 est un schéma fonctionnel d'un système de commande ; et
- les figures 2 à 5 sont des schémas illustrant respectivement une grille spatiale X, une cartographie de luminosité L, une cartographie d'éblouissement A et une cartographie O.

Le système de commande 1 représenté est destiné à gérer à la fois le confort visuel d'utilisateurs présents dans une pièce d'un bâtiment et la régulation thermique de la pièce.

La pièce est équipée de plusieurs vitrages actifs à propriétés de transmission optique électrocommandables $V_k$ que le système de commande 1 est apte à commander.

Le système 1 décrit concerne une seule pièce mais, plus généralement, le système de commande 1 peut commander l'éclairage de plusieurs pièces d'un bâtiment.

Les vitrages actifs $V_k$ sont par exemple des vitrages incluant un dispositif électrochimiquement actif réagissant chimiquement à l'application d'une alimentation électrique, tels les vitrages électrochromes. La transmission optique d'un tel vitrage est ainsi commandée électriquement.

On entend par domaine optique les domaines visible, infrarouge et ultraviolet.

Il existe de nombreux vitrages électrochromes.

Ils sont généralement classés en trois catégories : « tout organique » ou « tout polymère », « mixte », c'est-à-dire à la fois organique et inorganique, et « tout solide », c'est-à-dire généralement tout inorganique.

US-5 239 406 et EP-A-0 612 826 décrivent par exemple des dispositifs électrochromes organiques.

EP-0 253 713 et EP-0 670 346, EP-0 382 623, EP-0 518 754 ou EP-0 532 408 décrivent des dispositifs électrochromes mixtes.

EP-0 831 360 et WO-A-00/03290 décrivent des dispositifs électrochromes tout solide.

Avantageusement, le dispositif électrochimiquement actif est un dispositif dit « tout solide ». Un tel dispositif présente l'avantage d'être durable, s'agissant de couches inorganiques. Un tel dispositif présente en outre l'avantage de permettre de minimiser le nombre de substrats, les couches étant déposées sur un seul substrat.

Néanmoins, les vitrages actifs $V_k$ ne sont pas nécessairement électrochromes. Il s'agit, d'une manière générale, de vitrages actifs à propriétés de transmission otique électrocommandables, par exemple des vitrages gazochromes ou même thermochromes si le chauffage du matériau est réalisé électriquement.

Le système de commande 1 comprend :

- au moins un capteur spatial de luminosité 2 pour fournir une cartographie L de luminosité ; et
- une unité de commande 10 comprenant une mémoire 12 dans laquelle sont stockés des programmes aptes à commander la transmission optique de chacun des vitrages $V_k$.

Dans un but de gestion de l'éblouissement, le capteur spatial de luminosité 2 est apte à fournir au moins une valeur représentative de luminosité respectivement pour différentes zones spatiales constituant des sous-ensembles $X_i$ d'un ensemble X et fournir ainsi une cartographie L de luminosité dans laquelle les sous-ensembles $L_i$ de L sont associés aux ensembles $X_i$.

A noter que le terme « valeur » s'entend dans tout le texte de façon large. Il s'agit d'une valeur de tout type adapté. Il s'agit par exemple d'une unique valeur numérique, ou d'un ensemble de valeurs tel qu'un vecteur ou une matrice.

On entend par le terme « représentative » que cette valeur permet d'obtenir une information sur la luminosité, l'éblouissement, la température. Il s'agit par exemple d'une valeur d'intensité ou de tension d'un courant électrique.

Le capteur de luminosité est par exemple une caméra CCD. Elle est par exemple tournée vers l'espace de travail d'un utilisateur.

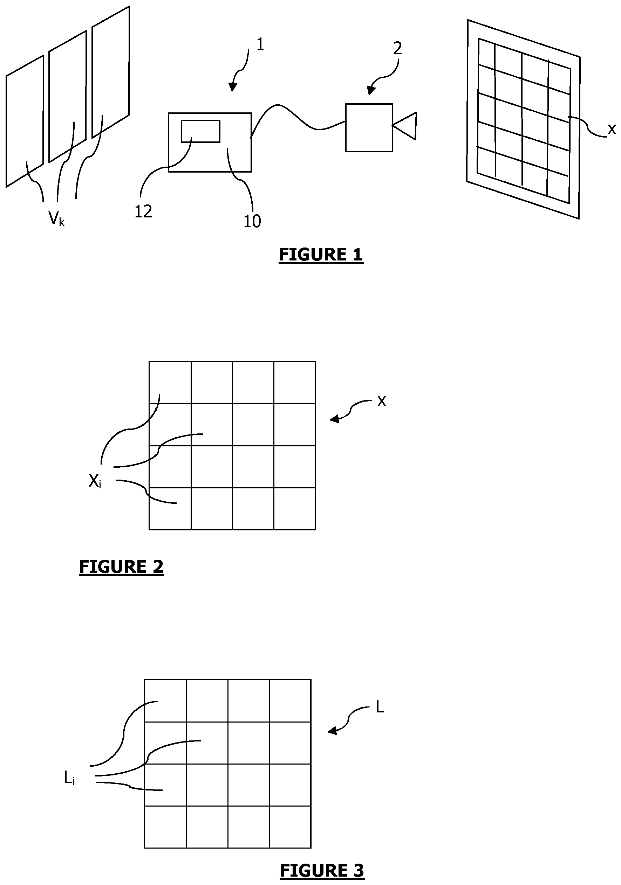

La figure 2 illustre une grille spatiale X.

La grille X représente l'ensemble de l'espace pris en compte par l'unité de commande pour gérer l'éblouissement des utilisateurs.

On a par exemple $X = \left\{ (x, y) \in \Re^2 \, Infx \leq x \leq Supx \, et \, Infy \leq y \leq Supy \right\}$.

La grille X a par exemple un contour rectangulaire correspondant à la fenêtre de vision du capteur de luminosité, ce rectangle étant dans cet exemple subdivisé en rectangles $X_i$ disjoints.

En variante, la subdivision de X est de tout type adapté. La subdivision est par exemple non uniforme. Une plus grande densité de sous-ensembles $X_i$ est par exemple prévue dans certaines zones.

D'une manière générale, la subdivision est par exemple faite de telle sorte que les $X_i$ soient disjoints et que $\cup X_i = X$.

Chaque $X_i$ correspond par exemple à un ensemble de pixels de la caméra 2.

Les zones $X_i$ sont par exemple relativement grandes, par exemple des carrés de côté entre 1 et 10 centimètres de la surface visualisée.

La cartographie L fournie par le capteur de luminosité est illustrée en figure 3.

Dans cet exemple $L_i = (L(X_i), X_i)$ avec $L(X_i)$, la luminosité moyenne mesurée (par exemple en lux) par le capteur spatial de luminosité 2. $L(X_i)$ est par exemple obtenue en moyennant la valeur obtenue pour chaque pixel du capteur 2 se situant dans la zone spatiale $X_i$.

La cartographie L, qui est un ensemble, est la réunion des ensembles $L_i$.

Il est à noter que les cartographies sont « virtuelles » dans le sens où elles ne sont pas destinées à être visualisées. Il s'agit donc de tables de valeurs dans les valeurs cartographiées sont associées à des valeurs spatiales.

On entend ainsi par cartographie un ensemble dans lequel au moins une valeur particulière (par exemple de luminosité) est associée à au moins une valeur spatiale, l'association étant par exemple réalisée par un pointeur vers une allocation de mémoire de la valeur spatiale, et d'une manière générale par un lien logique de tout type adapté.

Les programmes de l'unité de commande sont en outre aptes à définir une cartographie A de zones spatiales $A_j$ d'éblouissement à partir de la cartographie L de luminosité.

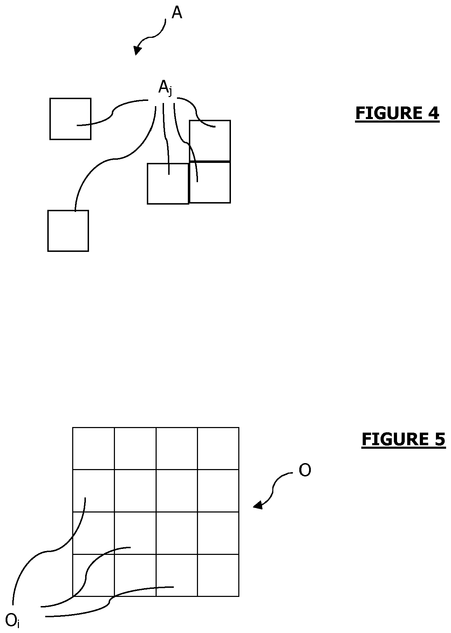

La figure 4 illustre une cartographie A obtenue en sélectionnant parmi les ensembles $L_i$ ceux dont la valeur de luminosité $L(X_i)$ est supérieure ou égale à une valeur prédéterminée.

Ainsi, dans cet exemple, $A = \{L_i/L(X_i) \geq LI\}$, LI étant une valeur de luminosité.

LI est par exemple une valeur prédéterminée stockée en mémoire. LI peut également être une valeur calculée par les programmes de commande, par exemple en fonction de la luminosité moyenne dans la grille spatiale X.

Les sous-ensembles $A_j$ de l'ensemble A sont ainsi des valeurs représentatives de zones spatiales fortement lumineuses.

En variante, la cartographie d'éblouissement A correspond à des zones spatiales fortement contrastées, ou fortement lumineuses et fortement contrastées.

Les zones fortement contrastées sont par exemple obtenues en comparant la valeur de luminosité $L(X_i)$ d'une zone $X_i$ avec la valeur de luminosité $L(X_j)$ d'une ou plusieurs zones $X_j$ adjacentes à la zone $X_i$.

On a par exemple :

$A = \{L_i/\exists j/d(X_i,X_j) \leq D$ et $|L(X_i)-L(X_j)| \geq CI\}$, $d(X_i,X_j)$ étant la distance entre les zones $X_i$ et $X_j$ et CI une valeur de contraste (ici une valeur de différence de luminosité).

La comparaison entre $L(X_i)$ et $L(X_j)$ est de tout type adapté. Il s'agit par exemple le rapport de luminosité

$\dfrac{L(X_i)}{L(X_j)}$ qui est calculé et comparé à CI, plutôt que la différence de luminosité.

De la même façon que pour LI, CI est par exemple une valeur prédéterminée stockée en mémoire. LI peut également être une valeur calculée par les programmes de commande, par exemple en fonction de la luminosité moyenne dans la grille spatiale X.

Les programmes de commande sont en outre aptes à utiliser une cartographie O de zones spatiales $O_m$ à luminosité électrocommandable, chaque sous-ensemble $O_m$ étant associé à l'un ou plusieurs desdits vitrages $V_k$ à transmission optique électrocommandable.

La figure 5 illustre une cartographie O.

Les sous-ensembles $O_m$ sont par exemple définis par : $O_i = \left\{ (a_i)_k \in \Re^k / L(X_i) = \sum_k a_k T(V_k) \right\}$ avec $T(V_k)$ la transmission lumineuse de chaque vitrage $V_k$.

Un sous-ensemble $O_i$ correspond dans ce cas à chaque zone spatiale $X_i$. Chaque sous-ensemble $O_i$ donne alors une information relative à l'influence de chaque vitrage $V_k$ sur la luminosité de la zone spatiale $X_i$

En variante néanmoins, les $O_m$ ne correspondent pas chacun à une zone $X_i$ mais par exemple à un ensemble de plusieurs zones $X_i$

A noter que les coefficients $(a_i)_k$ ne sont pas nécessairement constants et peuvent être fonction de paramètres telle que par exemple la position du soleil dans le ciel, laquelle est par exemple déterminée au moyen d'une horloge.

Les coefficients $(a_i)_k$ peuvent être prédéterminés. Dans un cas simple, il s'agit par exemple d'un vecteur de k chiffres ayant la valeur 0 ou 1, seul l'un d'entre eux ayant par exemple la valeur 1.

Les coefficients $(a_i)_k$ peuvent également être mesurés, dans une phase d'étalonnage préalable ou pendant le fonctionnement normal des vitrages.

Pour ce faire, la transmission est par exemple modifiée successivement par l'unité de commande pour chaque vitrage $V_k$.

La mesure de la luminosité de chaque zone spatiale $X_i$ et la variation connue de transmission du vitrage $V_k$ permet de calculer le coefficient $a_{i,k}$ pour chaque $X_i$, et de réitérer le calcul pour chaque vitrage $V_k$.

Une autre solution, plus rapide, consiste à varier simultanément la transmission de tous les vitrages $V_k$ mais avec une variation différente identifiable pour chaque vitrage $V_k$.

La transmission de chaque vitrage $V_k$ est par exemple variée selon la loi :

$$T(V_k) = TL_0 + b.\cos(w_k.t)$$

Avec $TL_0$, b et $w_k$ des constantes, t le temps, $T(V_k)$ la transmission lumineuse du vitrage $V_k$, les constantes $w_k$ ayant tous des valeurs différentes pour chaque vitrage $V_k$.

Les programmes de commande sont en outre aptes à commander la transmission lumineuse $T(V_k)$ de chacun desdits vitrages à transmission optique électrocommandable $V_k$ en fonction de A et de O.

A cet effet, la transmission des vitrages $V_k$ est par exemple modifiée de telle sorte que A deviennent l'ensemble nul.

Ce résultat peut par exemple être obtenu de façon itérative après un temps de latence mesuré avec une horloge.

Si A reste non nul, les vitrages $V_k$ sont par exemple tous commandés dans leur état coloré.

Il est à noter que le système de commande 1 peut être également dédié à gérer la transmission lumineuse des vitrages en fonction de la température dans la pièce ou de la luminosité générale dans la pièce, même si l'éblouissement est alors géré de préférence de façon prioritaire.

La caméra CCD peut par exemple également servir de capteur pour mesurer la luminosité générale dans la pièce, par exemple en moyennant la luminosité de chaque zone $X_i$.

En outre, il va de soi que le système peut comporter un ou plusieurs capteurs de chaque type.

Un capteur de présence peut également être prévu ou en variante remplacé par une horloge, la présence dans une pièce étant alors assimilée à une plage horaire prédéterminée. Le système de commande 1 gère par exemple l'éblouissement et la luminosité de façon prioritaire en présence d'un utilisateur dans la pièce et la température de façon prioritaire en l'absence d'utilisateur.

A noter qu'on entend par « utilisateur », un utilisateur de la pièce du bâtiment.

Enfin, la pièce peut être en outre équipée de moyens d'occultation tels que des stores, des rideaux, des vitrages LCD, etc., le système de commande étant apte à commander ces moyens d'occultation.

## Revendications

1. Système de commande (1) de la transmission optique d'une pluralité de vitrages actifs $V_k$ à propriétés de transmission optique électrocommandables, comprenant :

   - au moins un capteur spatial de luminosité pour fournir au moins une valeur représentative de luminosité respectivement Li=L(Xi) pour chaque zone spatiale constituant un sous-ensemble $X_i$ d'un ensemble X et fournir ainsi une cartographie L de luminosité dans laquelle les sous-ensembles $L_i$ de L sont associés aux sous-ensembles $X_i$ ;
   - une unité de commande comprenant une mémoire sur laquelle sont stockés des programmes aptes à commander la transmission optique de chacun desdits vitrages ;

   lesdits programmes étant aptes à :

   - définir une cartographie A de zones spatiales $A_j$ d'éblouissement à partir de la cartographie L de luminosité, les zones spatiales $A_j$ constituant des sous-ensembles de l'ensemble A;
   - utiliser une cartographie O de zones spatiales $O_m$ à luminosité électrocommandable, les zones spatiales $O_m$ constituant des sous-ensembles de l'ensemble O et chaque sous-ensemble $O_m$ étant associé à l'un ou plusieurs desdits vitrages actifs $V_k$ ;
   - commander la transmission optique de chacun desdits vitrages actifs $V_k$ en fonction de A et de O et en fonction également d'informations concernant l'influence relative de chaque vitrage actif $V_k$ sur la valeur représentative de luminosité de chaque zone spatiale $O_m$, par exemple un coefficient affecté à chaque vitrage $V_k$ pour chaque zone $O_m$.

2. Système (1) selon la revendication 1, dans lequel les sous-ensembles $A_j$ de l'ensemble A sont des valeurs représentatives de zones spatiales fortement lumineuses, fortement contrastées, ou fortement lumineuses et fortement contrastées.

3. Système (1) selon la revendication 2, dans lequel lesdites zones spatiales fortement lumineuses, fortement contrastées, ou fortement lumineuses et fortement contrastées sont chacune déterminées par rapport à un même niveau de référence absolu qui est prédéterminé ou calculé.

4. Système (1) selon la revendication 3, dans lequel les sous-ensembles $A_j$ de A correspondent à des zones spatiales pour lesquelles une valeur représentative de luminosité est supérieure ou égale à LI avec LI une valeur représentative de luminosité prédéterminée ou calculée.

**5.** Système (1) selon la revendication 3, dans lequel les sous-ensembles $A_j$ de A correspondent à des zones spatiales dont le rapport de valeur représentative de luminosité avec une zone spatiale voisine est supérieure ou égal à CI avec CI une valeur représentative de contraste prédéterminée ou calculée.

**6.** Système (1) selon l'une quelconque des revendications précédentes, dans lequel la cartographie O et les sous-ensembles $O_i$ sont représentatifs de zones spatiales dont la luminosité est contrôlée directement ou indirectement par un ou plusieurs desdits vitrages électrocommandables.

**7.** Système (1) selon l'une quelconque des revendications 1 à 6, dans lequel lesdits programmes sont aptes à obtenir automatiquement lesdites informations.

**8.** Système (1) selon la revendication 7, dans lequel lesdites informations sont obtenues par variation simultanée et asynchrone d'une pluralité ou de la totalité desdits vitrages actifs $V_k$.

**9.** Système (1) selon la revendication 8, dans lequel la variation asynchrone consiste à varier périodiquement la transmission optique desdits vitrages actifs $V_k$ avec des périodes de longueur différentes ou décalées dans le temps.

**10.** Système selon l'une quelconque des revendications précédentes, dans lequel plusieurs ou chacun desdits vitrages actifs $V_k$ sont commandés individuellement.

**11.** Système selon l'une quelconque des revendications précédentes, dans lequel lesdits vitrages actifs $V_k$ sont des vitrages d'une même pièce d'un bâtiment, les différentes zones spatiales concernant la pièce du bâtiment.

**12.** Système selon la revendication 7, dans lequel lesdites informations sont obtenues en variant simultanément la transmission de tous les vitrages Vk mais avec une variation différente identifiable pour chaque vitrage.

**13.** Ensemble comprenant une pluralité de vitrages actifs $V_k$ à propriétés de transmission optique électrocommandables et un système de commande de la transmission optique desdits vitrages $V_k$, dans lequel le système de commande est selon l'une quelconque des revendications précédentes.

**14.** Bâtiment comprenant un ensemble selon la revendication 13, l'ensemble étant par exemple installé dans une pièce du bâtiment.

**15.** Procédé de commande de la transmission optique d'une pluralité de vitrages actifs $V_k$ à propriétés de transmission optique électrocommandables, comprenant des étapes consistant à :

- utiliser au moins un capteur spatial de luminosité pour fournir au moins une valeur représentative de luminosité respectivement $L_i=L(X_i)$ pour chaque zone spatiale constituant un sous-ensemble $X_i$ d'un ensemble X et fournir ainsi une cartographie L de luminosité dans laquelle les ensembles $L_i$ sont associés aux sous-ensembles $X_i$ ;
- définir une cartographie A de zones spatiales $A_j$ d'éblouissement à partir de la cartographie L de luminosité, les zones spatiales $A_j$ constituant des sous-ensembles de l'ensemble A ;
- utiliser une cartographie O de zones spatiales $O_m$ à luminosité électrocommandable, les zones spatiales $O_m$ constituant des sous-ensembles de l'ensemble O et chaque sous-ensemble $O_m$ étant associé à l'un ou plusieurs desdits vitrages actifs $V_k$ ;
- commander la transmission optique de chacun desdits vitrages actifs $V_k$ en fonction de A et de O et en fonction également d'informations concernant l'influence relative de chaque vitrage actif $V_k$ sur la valeur représentative de luminosité de chaque zone spatiale $O_m$, par exemple un coefficient affecté à chaque vitrage $V_k$ pour chaque zone $O_m$.

**Patentansprüche**

**1.** Steuersystem (1) der optischen Übertragung einer Mehrzahl aktiver Verglasungen $V_k$ mit elektrisch steuerbaren Eigenschaften optischer Übertragung, das Folgendes umfasst:

- mindestens einen räumlichen Helligkeitssensor, um mindestens einen Wert zu liefern, der für Helligkeit, jeweils Li=L(Xi) für jede räumliche Zone, die eine Untereinheit $X_i$ einer Einheit X bildet, repräsentativ ist, und daher eine Helligkeitskartographie L zu liefern, in der die Untereinheiten $L_i$ von L mit den Untereinheiten $X_i$ assoziiert

sind;
- eine Steuereinheit, die einen Speicher umfasst, auf dem Programme gespeichert sind, die geeignet sind, um die optische Übertragung jeder der Verglasungen zu steuern;

wobei die Programme geeignet sind, um:

- eine Kartographie A räumlicher Blendungszonen $A_j$ ausgehend von der Helligkeitskartographie L zu definieren, wobei die räumlichen Zonen $A_j$ Untereinheiten der Einheit A bilden;
- eine Kartographie O räumlicher Zonen $O_m$ mit elektrisch steuerbarer Helligkeit zu verwenden, wobei die räumlichen Zonen $O_m$ Untereinheiten der Einheit O bilden und jede Untereinheit $O_m$ mit einer oder mehreren der aktiven Verglasungen $V_k$ assoziiert ist;
- die optische Übertragung jeder der aktiven Verglasungen $V_k$ in Abhängigkeit von A und von O und in Abhängigkeit auch von Informationen zu steuern, die den relativen Einfluss jeder aktiven Verglasung $V_k$ auf den Wert, der für die Helligkeit jeder räumlichen Zone $O_m$ repräsentativ ist, betreffen, zum Beispiel eines Koeffizienten, der jeder Verglasung $V_k$ für jede Zone $O_m$ zugewiesen ist.

2. System (1) nach Anspruch 1, wobei die Untereinheiten $A_j$ der Einheit A Werte sind, die für sehr helle, sehr kontrastierende oder sehr helle und sehr kontrastierende räumliche Zonen repräsentativ sind.

3. System (1) nach Anspruch 2, wobei die sehr hellen, sehr kontrastierenden oder sehr hellen und sehr kontrastierenden räumlichen Zonen jeweils bezüglich einem selben Absolutreferenzniveau, das vorbestimmt oder berechnet ist, bestimmt werden.

4. System (1) nach Anspruch 3, wobei die Untereinheiten $A_j$ von A räumlichen Zonen entsprechen, für die ein repräsentativer Helligkeitswert größer oder gleich LI ist, wobei LI ein Wert ist, der für vorbestimmte oder berechnete Helligkeit repräsentativ ist.

5. System (1) nach Anspruch 3, wobei die Untereinheiten $A_j$ von A räumlichen Zonen entsprechen, deren Verhältnis des für Helligkeit repräsentativen Werts mit einer benachbarten räumlichen Zone größer oder gleich CI ist, wobei CI ein Wert ist, der für vorbestimmten oder berechneten Kontrast repräsentativ ist.

6. System (1) nach einem der vorstehenden Ansprüche, wobei die Kartographie O und die Untereinheiten $O_i$ für räumliche Zonen repräsentativ sind, deren Helligkeit direkt oder indirekt durch eine oder mehrere der elektrisch steuerbaren Verglasungen gesteuert wird.

7. System (1) nach einem der Ansprüche 1 bis 6, wobei die Programme geeignet sind, die Informationen automatisch zu erhalten.

8. System (1) nach Anspruch 7, wobei die Informationen durch gleichzeitige und asynchrone Variation einer Mehrzahl oder sämtlicher der aktiven Verglasungen $V_k$ erhalten werden.

9. System (1) nach Anspruch 8, wobei die asynchrone Variation darin besteht, periodisch die optische Übertragung der aktiven Verglasungen $V_k$ mit Perioden mit unterschiedlicher oder zeitlich versetzter Länge zu variieren.

10. System nach einem der vorstehenden Ansprüche, wobei mehrere oder jede der aktiven Verglasungen $V_k$ individuell gesteuert wird/werden.

11. System nach einem der vorstehenden Ansprüche, wobei die aktiven Verglasungen $V_k$ Verglasungen ein und desselben Raums eines Gebäudes sind, wobei die unterschiedlichen räumlichen Zonen den Raum des Gebäudes betreffen.

12. System nach Anspruch 7, wobei die Informationen erhalten werden, indem die Übertragung aller Verglasungen $V_k$ gleichzeitig aber mit einer unterschiedlichen Variation, die für jede Verglasung identifizierbar ist, variiert wird.

13. Einheit, die eine Mehrzahl aktiver Verglasungen $V_k$ mit elektrisch steuerbaren Eigenschaften optischer Übertragung und ein Steuersystem der optischen Übertragung der Verglasungen $V_k$ umfasst, wobei das Steuersystem gemäß einem der vorstehenden Ansprüche beschaffen ist.

**14.** Gebäude, das eine Einheit nach Anspruch 13 umfasst, wobei die Einheit zum Beispiel in einem Raum des Gebäudes installiert ist.

**15.** Verfahren zum Steuern der optischen Übertragung einer Mehrzahl aktiver Verglasungen $V_k$ mit elektrisch steuerbaren Eigenschaften optischer Übertragung, das Schritte umfasst, die bestehen aus:

- Verwenden mindestens eines räumlichen Helligkeitssensors, um mindestens einen Wert zu liefern, der für Helligkeit repräsentativ ist, jeweils $L_i=L(X_i)$ für jede räumliche Zone, die eine Untereinheit $X_i$ einer Einheit X bildet, und daher eine Helligkeitskartographie L zu liefern, in der die Einheiten $L_i$ mit den Untereinheiten $X_i$ assoziiert sind;
- eine Kartographie A räumlicher Blendungszonen $A_j$ ausgehend von der Helligkeitskartographie L zu definieren, wobei die räumlichen Zonen $A_j$ Untereinheiten der Einheit A bilden;
- eine Kartographie O räumlicher Zonen $O_m$ mit elektrisch steuerbarer Helligkeit zu verwenden, wobei die räumlichen Zonen $O_m$ Untereinheiten der Einheit O bilden und jede Untereinheit $O_m$ mit einer oder mehreren der aktiven Verglasungen $V_k$ assoziiert ist;
- die optische Übertragung jeder der aktiven Verglasungen $V_k$ in Abhängigkeit von A und von O und in Abhängigkeit auch von Informationen zu steuern, die den relativen Einfluss jeder aktiven Verglasung $V_k$ auf den Wert, der für die Helligkeit jeder räumlichen Zone $O_m$ repräsentativ ist, betreffen, zum Beispiel eines Koeffizienten, der jeder Verglasung $V_k$ für jede Zone $O_m$ zugewiesen ist.

## Claims

**1.** A system (1) for controlling the optical transmission of a plurality of active windows $V_k$ with electro-controllable optical transmission properties, comprising:

- at least one spatial brightness sensor for supplying at least one value representative of brightness respectively Li=L(Xi) for each spatial area forming a subset $X_i$ of a set X and thus supplying a mapping L of brightness in which the subsets $L_i$ of L are associated with the subsets $X_i$;
- a control unit comprising a memory in which programs are stored which are capable of controlling the optical transmission of each of said windows;

said programs being capable of:

- defining a mapping A of spatial areas $A_j$ of glare from the mapping L of brightness, the spatial areas $A_j$ forming subsets of the subset A ;
- using a mapping O of spatial areas $O_m$ with electro-controllable brightness, the spatial areas $O_m$ forming subsets of the subset O and each subset $O_m$ being associated with one or more of said active windows $V_k$;
- controlling the optical transmission of each of said active windows $V_k$ as a function of A and of O and as a function also of information concerning the relative influence of each active window $V_k$ on the value representative of brightness of each spatial area $O_m$, for example a coefficient assigned to each window $V_k$ for each area $O_m$.

**2.** The system (1) as claimed in claim 1, in which the subsets $A_j$ of the set A are values representative of spatial areas with strong brightness, strong contrast, or strong brightness and strong contrast.

**3.** The system (1) as claimed in claim 2, in which said spatial areas with strong brightness, strong contrast, or strong brightness and strong contrast are each determined in relation to one and the same absolute reference level which is predetermined or calculated.

**4.** The system (1) as claimed in claim 3, in which the subsets $A_j$ of A correspond to spatial areas for which a value representative of brightness is greater than or equal to LI with LI being a predetermined or calculated value representative of brightness.

**5.** The system (1) as claimed in claim 3, in which the subsets $A_j$ of A correspond to spatial areas in which the ratio of value representative of brightness with an adjacent spatial area is greater than or equal to CI with CI being a predetermined or calculated value representative of contrast.

**6.** The system (1) as claimed in any one of the preceding claims, in which the mapping O and the subsets $O_i$ are

representative of spatial areas in which the brightness is controlled directly or indirectly by one or more of said electro-controllable windows.

7. The system (1) as claimed in any one of claims 1 to 6, in which said programs are capable of obtaining said information automatically.

8. The system (1) as claimed in claim 7, in which said information is obtained by the simultaneous and asynchronous variation of a plurality or of all of said active windows $V_k$.

9. The system (1) as claimed in claim 8, in which the asynchronous variation consists in periodically varying the optical transmission of said active windows $V_k$ with periods of length that are different or offset in time.

10. The system as claimed in any one of the preceding claims, in which a number or each of said active windows $V_k$ are controlled individually.

11. The system as claimed in any one of the preceding claims, in which said active windows $V_k$ are windows of one and the same room of a building, the different spatial areas concerning the room of the building.

12. The system as claimed in claim 7, wherein information are obtained by simultaneously varying the transmission of all the windows $V_k$, but with an identifiable different variation for each window $V_k$

13. An assembly comprising a plurality of active windows $V_k$ with electro-controllable optical transmission properties and a system for controlling the optical transmission of said windows $V_k$, in which the control system is as claimed in any one of the preceding claims.

14. A building comprising an assembly as claimed in claim 13, the assembly being, for example, installed in a room of the building.

15. A method for controlling the optical transmission of a plurality of active windows $V_k$ with electro-controllable optical transmission properties, comprising steps consisting in:

- using at least one spatial brightness sensor to supply at least one value representative of brightness respectively $L_i=L(X_i)$ for each spatial areas forming the subset $X_i$ of a set X and thus supply a mapping L of brightness in which the sets $L_i$ are associated with the subsets $X_i$;
- defining a mapping A of spatial areas $A_j$ of glare from the mapping L of brightness, spatial areas $A_j$ forming the subset of a set A;
- using a mapping O of spatial areas $O_m$ with electro-controllable brightness, the spatial areas $O_m$ forming subsets of the subset O and each subset $O_m$ being associated with one or more of said active windows $V_k$;
- controlling the optical transmission of each of said active windows $V_k$ as a function of A and of O and as a function also of information concerning the relative influence of each active window $V_k$ on the value representative of brightness of each spatial area $O_m$, for example a coefficient assigned to each window $V_k$ for each area $O_m$.

**FIGURE 1**

**FIGURE 2**

**FIGURE 3**

A

$A_j$

**FIGURE 4**

**FIGURE 5**

O

$O_i$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008048181 A1
- US 5239406 A
- EP 0612826 A
- EP 0253713 A
- EP 0670346 A
- EP 0382623 A
- EP 0518754 A
- EP 0532408 A
- EP 0831360 A
- WO 0003290 A

**Littérature non-brevet citée dans la description**

- Effect of switchable glazing on discomfort glare from windows. *Building Environment,* 2009, vol. 44, 1171-1180
- A novel Lightning Control System Integrating High Dynamic Range Imaging and DALI. *LEUKOS,* vol. 2 (4), 307-322